(19) Europäisches Patentamt
European Patent Office
Office européen des brevets

(11) Veröffentlichungsnummer: **0 021 361**
**B1**

# (12) EUROPÄISCHE PATENTSCHRIFT

(45) Veröffentlichungstag der Patentschrift: **06.10.82**

(51) Int. Cl.³: **C 07 F 9/113,** C 07 F 9/173 // C07F9/14

(21) Anmeldenummer: **80103449.7**

(22) Anmeldetag: **20.06.80**

(54) **Verfahren zur Herstellung von Phosphorsäurepropargylestern.**

(30) Priorität: **02.07.79 DE 2926652**

(43) Veröffentlichungstag der Anmeldung: **07.01.81 Patentblatt 81/1**

(45) Bekanntmachung des Hinweises auf die Patenterteilung: **06.10.82 Patentblatt 82/40**

(84) Benannte Vertragsstaaten: **BE CH DE FR GB IT LI NL**

(56) Entgegenhaltungen:
**EP-A-0 000 127**
**EP-A-0 008 366**
**EP-A-0 008 648**
**DE-A-2 753 455**
**FR-A-2 322 870**
**JP-B-52-42 779**

(73) Patentinhaber: **BAYER AG, Zentralbereich Patente, Marken und Lizenzen, D-5090 Leverkusen 1, Bayerwerk (DE)**

(72) Erfinder: **Arend, Günter, Dr., Wiedstrasse 8, D-4047 Dormagen (DE)**
Erfinder: **Feyen, Peter, Dr., Mozartstrasse 1, D-4020 Mettmann (DE)**

**EP 0 021 361 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Verfahren zur Herstellung von Phosphorsäurepropargylestern

Phosphorsäureester mit Proparylresten der allgemeinen Formel (I)

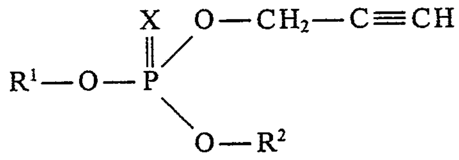

(I)

worin

| | |
|---|---|
| $R^1$ und $R^2$ | unabhängig voneinander für die Reste Aryl, $C_{1-4}$-Alkyl, -Alkenyl und -Alkinyl stehen, und |
| X | Sauerstoff oder Schwefel bedeutet, |

sind neben anderen Verbindungen in der europäischen Patentanmeldung 78 100 117.7 als hochwirksame Insektizidsynergisten bekanntgeworden.

Zur Herstellung von Phosphorsäureestern sind in der Literatur eine Reihe von Verfahren beschrieben, eine Übersicht findet sich in »Houben–Weyl, Methoden der Organischen Chemie«, Bd. 12/2, S. 299 ff (1964). Zur Herstellung von Phosphorsäurepropargylestern sind diese jedoch nur beschränkt anwendbar und liefern im allgemeinen schlechte Ausbeuten.

Propargylalkohol ist nur wenig reaktiv und setzt sich insbesondere mit Phosphorsäurediesterchloriden im Vergleich zu gesättigten aliphatischen Alkoholen oder Allylalkohol nur sehr schwer um.

So läßt sich beispielsweise Phosphoroxichlorid mit überschüssigem Butanol ohne Säurefänger bei 50° C zu 85% in Tributylphosphat umsetzen. Die analoge Reaktion mit Phosphorsäurediethylesterchlorid und Propargylalkohol liefert dagegen keine isolierbaren Mengen an Propargylester (siehe unten Vergleichsbeispiel 6). Auch die entsprechende Reaktion mit Phosphoroxichlorid ist träge (siehe unten Vergleichsbeispiel 7).

Auch der Reaktionsweg von Phosphoroxichlorid über Phosphorsäurepropargylesterdichlorid zu Phosphorsäurediethylpropargylester liefert insgesamt nur unbefriedigende 25% Ausbeute (siehe unten Vergleichsbeispiel 7), Phosphorsäuredipropargylesterchlorid ist ohne Anwesenheit eines Säurefängers überhaupt nicht herstellbar, das Reaktionsgemisch zersetzt sich bei der Destillation.

Arbeitet man in Gegenwart von mindestens äquimolaren Mengen an Säurefängern, wie beispielsweise Triethylamin, so erhält man aus Phosphorsäureethylesterdichlorid und Propargylalkohol den Phosphorsäureethyldipropargylester in maximal 51% Ausbeute (siehe die Vergleichsbeispiele 1–5). Hier entstehen offenbar stickstoffhaltige Nebenprodukte, denn trotz sorgfältigsten Auswaschens mit verdünnter Schwefelsäure wird bei der Vakuumdestillation stets ein leichtflüchtiges, stark basisches Zersetzungsprodukt in der Kühlfalle bei –70° C kondensiert. Entsprechend wird der Destillationssumpf stark sauer und verharzt rasch.

In der japanischen Patentanmeldung 77 042-779 wird die Umsetzung von im Überschuß eingesetzten, gesättigten aliphatischen Alkoholen mit Phosphoroxichlorid oder Phosphorsäurealkylesterdichloriden bei Temperaturen unter 30° C in Gegenwart einer mindestens äquimolaren Menge Natronlauge beschrieben. Nach diesem Verfahren wird beispielsweise Trimethylphosphat in 85% Ausbeute erhalten. Beim Versuch, Phosphorsäureethylesterdichlorid analog mit Propargylalkohol umzusetzen, erhält man maximal 70% Ausbeute nach bis zu 20 h Reaktionszeit. Trennt man die organische Phase durch Extraktion mit Methylenchlorid oder Chloroform ab und wäscht diese mit Sodalösung und Wasser, so stellt sich beim Stehen stets ein pH-Wert von 1–2 ein. Offensichtlich ist das Phosphorchlorid nicht quantitativ umgesetzt worden und spaltet langsam Säure ab. Extrahiert man mit Toluol anstelle von Methylenchlorid oder Chloroform, so kann man die Anwesenheit von Chlorid (nach Alkoholyse) mit Silbernitrat nachweisen. Erhöht man die Reaktionszeit noch weiter, so sinkt die Ausbeute durch Hydrolyse wieder ab (siehe hierzu die Vergleichsbeispiele 8 und 9).

Recht gut verläuft die Umsetzung von Dialkylphosphiten mit Propargylalkohol in Gegenwart von überschüssigem Tetrachlorkohlenstoff sowie eines tertiären Amins analog zu G. H. Steinberg, J. Org. Chem., 15, 637 (1950). Diese Reaktion erlaubt ausschließlich die Herstellung von Phosphorsäuremonopropargylestern und ist in der Technik nur schwierig zu realisieren. Die Rückgewinnung des zum Hydrochlorid umgesetzten Amins sowie die Abtrennung und Rückgewinnung des überschüssigen Amins, des überschüssigen Tetrachlorkohlenstoffs und des gebildeten Chloroforms verlangen eine aufwendige Anlage. Zudem springt die Reaktion meist verzögert an und läuft dann stark exotherm mit großer Geschwindigkeit ab, so daß die Abführung der Reaktionswärme im Labor leicht, im technischen Maßstab jedoch nur schwer möglich ist.

Es wurde nun gefunden, daß die Ausbeute und Reinheit bei der Herstellung von Phosphorsäurepropargylestern weiter gesteigert werden kann, wenn man die Synthese in Gegenwart katalytischer Mengen an tertiären Aminen oder quartären Ammonium- bzw. Phosphoniumsalzen mit mindestens 9 C-Atomen als Zweiphasenreaktion durchführt und eine anorganische Base als

Säurefänger verwendet.

Gegenstand der Erfindung ist somit ein Verfahren zur Herstellung von Phosphorsäurepropargylestern der allgemeinen Formel (I)

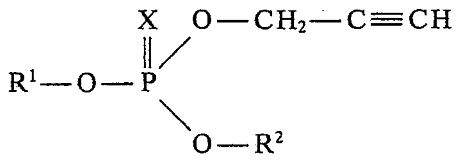

(I)

worin

$R^1$ und $R^2$ unabhängig voneinander für Aryl, $C_{1-4}$-Alkyl, -Alkenyl- und -Alkinylreste stehen und
X Sauerstoff oder Schwefel bedeutet,

dadurch gekennzeichnet, daß man ein Phosphorsäuremono- oder -diesterchlorid mit mindestens der äquivalenten Menge Propargylalkohol in einem Zweiphasensystem in Gegenwart einer anorganischen Base als Säurefänger unter Verwendung von 0,001 bis 100 Mol-%, vorzugsweise 0,01 bis 10 Mol-%, bezogen auf Phosphorsäureesterchlorid, eines tertiären Amins, quartären Ammonium- oder -phosphoniumsalzes mit zusammen mindestens 9 C-Atomen als Katalysator umsetzt.

Der Propargylalkohol kann bei dieser Reaktion in einem beliebig hohen Überschuß eingesetzt werden. Es ist jedoch ausreichend und wird daher bevorzugt, den Überschuß an Propargylalkohol auf 0 bis 10 Mol-%, bezogen auf Phosphorsäureesterchlorid, zu beschränken.

Üblicherweise wird bei ähnlichen, jedoch unkatalysierten Reaktionen der aliphatische Alkohol in großem Überschuß eingesetzt, um die als Nebenreaktion ablaufende Hydrolyse des Phosphorsäureesterchlorids wie auch des gebildeten Phosphorsäuretrieesters möglichst gering zu halten. So wird beispielsweise in der zuvor zitierten japanischen Patentschrift 77 042-779 ein 233%iger Überschuß an Methanol eingesetzt. Arbeitet man dagegen mit annähernd äquimolaren Alkoholmengen, so muß Wasser bei der Veresterung weitgehend ausgeschlossen werden (siehe hierzu »Houben—Weyl, Methoden der Organischen Chemie«, Bd. 12/2, Vorschriften S. 315—321). Vor diesem Hintergrund war nicht zu erwarten, daß nach dem erfindungsgemäßen Verfahren Phosphorsäureesterhalogenide mit dem wenig reaktiven Propargylalkohol in guter Reinheit und in Ausbeuten bis zu 96% umgesetzt werden können, selbst wenn man den Propargylalkohol nur in einem geringen Überschuß, d. h. bis zu 10 Mol-%, einsetzt.

Verwendet man ein tertiäres Amin als Katalysator, so setzt man dies vorzugsweise zu 1 bis 10 Mol-% dem Ansatz zu, von den quartären Ammonium- bzw. Phosphoniumsalzen genügen 0,01 bis 1 Mol-%, jeweils bezogen auf Phosphorsäureesterchlorid. Die tertiären Amine lassen sich durch Säureextraktion quantitativ aus der organischen Phase entfernen. Zur Isolierung der mitunter thermisch labilen Phosphorsäurepropargylester braucht man die organische Phase des Reaktionsgemisches somit nur ausreichend zu waschen und zur Entfernung von niedrigsiedenden Bestandteilen und gegebenenfalls Lösungsmitteln anzudestillieren bzw. zu strippen. Als Rückstand läßt sich der Phosphorester in hervorragender Ausbeute und Reinheit isolieren.

Die katalytisch wesentlichen aktiveren quartären Ammonium- bzw. Phosphoniumsalze verbleiben jedoch überwiegend nicht extrahierbar in der organischen Phase, welche somit, vorzugsweise destillativ, gereinigt werden muß.

Die Reaktionstemperatur kann zwischen $-10$ und $+80°C$, vorzugsweise zwischen 0 und $+40°C$, betragen. Dabei begünstigt eine hohe Reaktionstemperatur die Hydrolyse des Phosphoresterchlorids und des Phosphoresters und verringert so die Ausbeute.

In einer bevorzugten Form des erfindungsgemäßen Verfahrens wird der Propargylalkohol zusammen mit dem Katalysator und gegebenenfalls einem Teil des verwendeten Lösungsmittels vorgelegt. Unter Kühlung läßt man in 1 bis 5 Std. unter intensivem Rühren gleichzeitig durch getrennte Zuläufe eine Lösung des Phosphorsäureesterchlorids in zwei Volumenteilen des organischen Lösungsmittels und eine wäßrige Lösung der anorganischen Base zulaufen. Man rührt noch 0,5 bis 25 Std. nach, filtriert gegebenenfalls vom ausgeschiedenen Salz ab und trennt die Phasen. Die organische Phase wird mit Wasser gewaschen und gegebenenfalls mit einem inerten Mittel getrocknet. Das Lösungsmittel wid abdestilliert, das verbleibende Rohprodukt kann durch Vakuumdestillation am Dünnschichtverdampfer oder durch fraktionierte Destillation über eine Kolonne weiter gereinigt werden.

Es ist prinzipiell möglich, die Reaktion auch ohne Zusatz eines Hilfslösungsmittels durchzuführen. Wegen der schlechten Löslichkeit sowohl der Phosphorsäureesterchloride wie auch der hieraus gebildeten Phosphorsäurepropargylester in der Propargylalkohol/Wasser-Phase läuft die Umsetzung als Zweiphasengrenzreaktion ab und wird durch die erfindungsgemäßen Katalysatoren beschleunigt. Die erzielbaren Ausbeuten sind jedoch in Gegenwart von inerten, wenig wasserlöslichen organischen Verdünnungsmitteln im allgemeinen höher. Nachstehende Lösungsmittel können beispielsweise vorteilhaft verwendet werden: Halogenkohlenwasserstoffe, wie Methylenchlorid, Chloroform,

Tetrachlorkohlenstoff, Dichlorethan, Trichlorethylen, Tetrachlorethylen, Chlorbenzol und Dichlorbenzol; Kohlenwasserstoffe wie Benzol, Toluol, Xylol und Verschnitte hiervon mit aliphatischen Kohlenwasserstoffen; Ether wie Diethylether, Dipropylether, Dibutylether, substituierte Kohlenwasserstoffe wie Nitromethan, Nitroethan, Nitrobenzol, Benzonitril; Ketone wie Methylpropylketon, Methylbutylketon, Methylisobutylketon und Ester wie Essigsäureethylester, Essigsäurepropylester, Essigsäurebutylester, Propionsäureethylester, Propionsäurepropylester, Propionsäurebutylester.

Als anorganische Basen dienen vorzugsweise wasserlösliche Alkali- bzw. Erdalkalihydroxide und -carbonate wie Natriumhydroxid, Kaliumhydroxid, Bariumhydroxid, Natriumbicarbonat, Natriumcarbonat und Kaliumcarbonat. Auch wenig wasserlösliche Erdalkalibasen wie Magnesiumcarbonat, Magnesiumoxid, Calciumoxid, Calciumcarbonat, Bariumoxid und Bariumcarbonat können verwendet werden, sie werden jedoch vorteilhaft zusammen mit Propargylalkohol Wasser und Katalysator im Reaktionsgefäß vorgelegt und angeschlämmt.

Die vorzulegende Wassermenge ist wenig kritisch, es kann sogar auf die Wasservorlage ganz verzichtet werden. Als vorteilhaft hat sich eine Variante erwiesen, bei der so viel Wasser vorgelegt wird, daß man am Ende der Reaktion eine gesättigte Salzlösung als wäßrige Phase erhält.

Eine Auswahl geeigneter Katalysatoren für das erfindungsgemäße Verfahren ist nachstehend aufgeführt:

Benzyldimethylamin, Dibenzylmethylamin, Benzyldiethylamin, Benzyl-di(2-cyanoethyl)-amin, Tributylamin, Tris-2-Ethylhexylamin, Stearyldimethylamin, Tetrabutylammoniumchlorid, Tricaprylmethylammoniumchlorid, Tris-2-ethylhexyl-methylammoniumchlorid, Trioctyl-methylammoniumchlorid, Trimethylphenylammoniumchlorid, Trimethylbenzylammoniumchlorid, Triethylbenzylammoniumchlorid, Trimethylbenzylammoniumhydroxid, Benzyldodecyldimethylammoniumchlorid, Stearyltrimethylammoniumchlorid, Lauryltrimethylammoniumchlorid, Myristyltrimethylammoniumchlorid, Tetrabutylphosphoniumchlorid, Triphenylmethylphosphoniumbromid.

Die anorganische Base wird beim erfindungsgemäßen Verfahren vorzugsweise in mindestens äquivalenten Mengen als Säurefänger eingesetzt.

Bevorzugte erfindungsgemäß erhältliche Verbindungen der Formel I sind solche, in welchen X für Sauerstoff, $R^1$ für den Propargylrest und $R^2$ für einen $C_1-C_4$-Alkylrest stehen.

Die Vergleichsbeispiele illustrieren die Ergebnisse, welche man bei der Darstellung von Phosphorsäurepropargylestern nach bekannten Verfahren erzielt. Die anschließenden Beispiele verdeutlichen das erfindungsgemäße Verfahren.

### Vergleichsbeispiele zur Herstellung von Phosphorsäurepropargylestern unter Verwendung von Pyridin oder Triethylamin; allgemeine Vorschrift

1 Mol des jeweiligen Phosphorsäureesterchlorids wird unter Kühlung bei 10 bis 20°C zu einem Gemisch aus 500 ml Methylenchlorid oder Toluol, und je umzusetzendem Chloräquivalent, 1,1 Mol Propargylalkohol und 1,1 Mol der organischen Base (entsprechend jeweils 10% Überschuß) getropft. Man rührt 2 Std. bei Raumtemperatur und 2 Std. bei ca. 40°C nach, filtriert vom Aminhydrochlorid ab und wäscht die Lösung zunächst mehrfach mit 10%iger $H_2SO_4$ und dann mit Wasser.

Man isoliert das Produkt durch Vakuumdestillation über eine kleine Kolonne. Dabei entweichen leichtflüchtige, basische, stickstoffhaltige Zersetzungsprodukte, welche in einer Kühlfalle bei −70°C kondensiert werden. Der Destillationssumpf reagiert entsprechend stark sauer und verharzt rasch.

Nach dieser Vorschrift wurden die Vergleichsbeispiele 1−5 der Tabelle I durchgeführt.

### Vergleichsbeispiele zur Herstellung von Phosphorsäurepropargylestern ohne Verwendung von anorganischen Basen als Säurefängern

#### Vergleichsbeispiel 6

Phosphorsäurediethylpropargylester über Phosphorsäurediethylesterchlorid.

Zu 1,2 Mol Propargylalkohol wird unter Rühren und Durchleiten von Stickstoff bei 20−30°C 1 Mol Phosphorsäurediethylesterchlorid getropft. Man läßt 2 Std. bei 20−30°C und 1 Std. bei 50°C reagieren, nimmt mit 500 ml Methylenchlorid auf und wäscht zweimal mit verdünnter Sodalösung und einmal mit Wasser. Bei der Destillation erhält man 0,76 Mol Phosphorsäurediethylesterchlorid (Kp.: 76−53°C/0,6−0,7 mbar) zurück und isoliert keinen Phosphorsäurediethylpropargylester. Führt man die Reaktion 6 Std. bei 80 bis 100°C durch, so erhält man ca. 15% unsauberes Diethylpropargylphosphat, Kp.: 70−82°C/0,2 mbar.

Tabelle I

| Vergleichsbeispiel Nr. | Einsatzprodukt | Base | Hergestellter Ester | Siedepunkt | $n_D^{20}$ des Propargylesters | Ausbeute % |
|---|---|---|---|---|---|---|
| 1 | $POCl_3$ | Pyridin | $PO(OCH_2-C\equiv CH)_3$ | 105–108°C/0,1 mbar | 1,4682 | 9,7 |
| 2 | 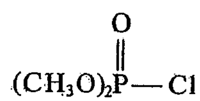 | Pyridin | 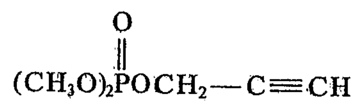 | 72°C/0,2 mbar | 1,4282 | 24,5 |
| 3 | 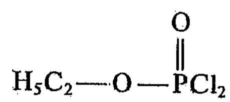 | $(H_5C_2)_3N$ | 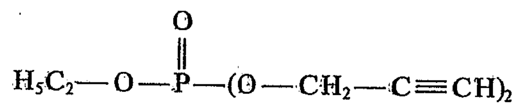 | 100°C/0,1 mbar | 1,4488 | 49,5 |
| 4 | 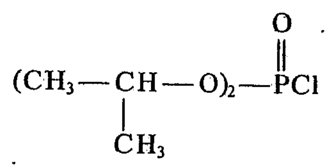 | Pyridin | 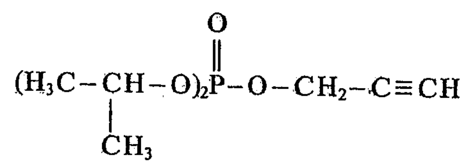 | 100°C/3 mbar | 1,4270 | 51,0 |
| 5 | 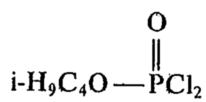 | $(H_5C_2)_3N$ | 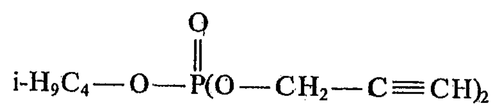 | 122°C/0,2 mbar | 1,4490 | 39,4 |

## Vergleichsbeispiel 7

### Phosphorsäurediethylpropargylester über Phosphorsäurepropargylesterdichlorid

Zu 1,2 Mol Phosphoroxichlorid tropft man bei 35° C 1 Mol Propargylalkohol. Die Reaktion ist leicht exotherm, es entwickelt sich Chlorwasserstoff. Man rührt 1 Std. bei 50° C und 1 Std. bei 60° C nach und destilliert. Das Produkt zersetzt sich sehr leicht.

Ausbeute: 45% Phosphorsäurepropargylesterdichlorid, undestilliert.

Kp.: 89–91° C/21 mbar
$n_D^{20}$ : 1,4683

1 Mol dieses undestillierten Dichlorids tropft man bei 20–30° C unter Rühren und Durchleiten von Stickstoff zu 4 Mol Ethanol (100% Überschuß). Man läßt 2 Std. bei 25° C und 1 Std. bei 50° C reagieren, destilliert im Vakuum den Ethanolüberschuß ab und wäscht den Rückstand mit verdünnter Sodalösung und Wasser neutral. Bei der Destillation erhält man

4,3% Phosphorsäureethylpropargylesterchlorid
55,9% Phosphorsäurediethylpropargylester
4,0% einer höhersiedenden Komponente

Die Ausbeute über beide Stufen beträgt somit 25,2% an Phosphorsäurediethylpropargylester.

### Vergleichsbeispiele zur Herstellung von Phosphorsäurepropargylestern unter Verwendung von Natronlauge als Base (Analog zur japanischen Patentanmeldung 77 042-779)

## Vergleichsbeispiel 8

### Herstellung von Phosphorsäurediethylpropargylester mit großem Propargylalkoholüberschuß in Gegenwart von Natronlauge

1 Mol Phosphorsäurediethylesterchlorid und 1,07 Mol 50%ige Natronlauge werden tropfenweise zu 3,33 Mol Propargylalkohol (233% Überschuß) bei 15–20° C hinzugefügt. Die Mischung wird 15 min gerührt, mit Wasser zum Lösen des Salzes versetzt und mit 800 ml Chloroform extrahiert. Bei der Destillation erhält man 70% an Phosphorsäurediethylpropargylester.

## Vergleichsbeispiel 9

### Wiederholung von Vergleichsbeispiel 8, jedoch mit nur 3% Überschuß an Propargylalkohol

Ausbeute: 61% Phosphorsäurediethylpropargylester.

Unter den Bedingungen der Vergleichsbeispiele 8 und insbesondere 9 setzt sich das Phosphorsäurediethylesterchlorid offensichtlich nur unvollständig um. Die Lösung des Rohproduktes in Chloroform reagiert nach mehrstündigem Stehen stets stark sauer. Extrahiert man mit Toluol anstelle von Chloroform, so läßt sich mit alkoholischer Silbernitratlösung Chlorid in der organischen Phase nachweisen, welches die Anwesenheit von nichtumgesetztem Phosphoresterchlorid anzeigt.

Längere Reaktionszeiten lassen die Ausbeute absinken, offenbar tritt dann Hydrolyse aus.

Die analoge Umsetzung von Phosphorsäureethylesterdichlorid mit 2,06 Äquivalenten Propargylalkohol verläuft mit 55% in noch geringerer Ausbeute.

## Beispiel 1
(erfindungsgemäß)

### Phosphorsäurediethylpropargylester

1 Mol Phosphorsäurediethylesterchlorid wird zusammen mit 4 g Tricaprylmethylammoniumchlorid (1 Mol-%) und 500 ml Chloroform in einem Reaktionsgefäß vorgelegt. Bei 10° C tropft man gleichzeitig innerhalb von 30 min 1,1 Mol Propargylalkohol (10% Überschuß) und 1,03 Mol NaOH, gelöst in 110 ml Wasser, hinzu.

Man rührt noch 3 Std. bei 10° C und trennt die Phasen. Die organische Phase wird mit verdünnter

Sodalösung und mit 200 ml Wasser gewaschen. Das Chloroform wird bei Normaldruck abdestilliert. Die gaschromatographisch bestimmte Ausbeute (Phosphorsäuretriethylester als innerer Standard) beträgt 96,2%. Nach fraktionierter Destillation erhält man 88,9% Phosphorsäurediethylpropargylester.

Beispiele 2 – 13
(erfindungsgemäß)

Phosphorsäureethyldipropargylester

Allgemeine Vorschrift

2,06 Mol Propargylalkohol, die nachstehend angegebene Menge des jeweiligen Katalysators und gegebenenfalls 250 ml des jeweils verwendeten Lösungsmittels werden im Reaktionsgefäß vorgelegt. Unter intensivem Rühren läßt man bei 10 bis 15°C innerhalb von 3 Std. gleichzeitig eine Lösung von 1,0 Mol Phosphorsäureethylesterdichlorid in 2 Volumenteilen des Lösungsmittels und 2,2 Mol Natronlauge als ca. 20%ige Lösung in Wasser zulaufen. Man läßt nach 1 Std. bei 10 bis 15°C nachrühren. Die Reaktionsmischung muß alkalisch sein, andernfalls können bis zu 0,2 Mol der verdünnten Natronlauge nachgesetzt werden.

Nach erfolgter Phasentrennung wird die organische Phase mit 200 ml Wasser extrahiert. Man zieht im Vakuum leichtsiedende Komponenten wie das Lösungsmittel und den Propargylalkoholüberschuß ab, trocknet den Rückstand mit wasserfreiem Kaliumcarbonat und filtriert. Das Rohprodukt weist nach gaschromatographischer Analyse einen Gehalt von über 96% auf, es kann durch Dünnschichtdestillation weiter gereinigt werden.

Auf diese Weise wurden die in der Tabelle II aufgeführten Beispiele durchgeführt.

Die in nachstehender Tabelle II aufgeführten Ausbeuten beziehen sich auf 100%iges Produkt und wurden gaschromatographisch gegen Triethylphosphat als internen Standard ermittelt. Bei der Destillation ist mit einem Produktverlust von 3 bis 5% zu rechnen.

Tabelle II

| Beispiel Nr. | Katalysator(-menge) | Lösungsmittel | Ausbeute % |
|---|---|---|---|
| 2 | 0,3 Mol-% Tricaprylmethylammoniumchlorid | $CH_2Cl_2$ | 87,5 |
| 3 | 0,06 Mol-% Tricaprylmethylammoniumchlorid | $CH_2Cl_2$ | 92,5 |
| 4 | 0,06 Mol-% Tricaprylmethylammoniumchlorid | – | 76,6 |
| 5 | 0,06 Mol-% Tricaprylmethylammoniumchlorid | Toluol | 80,0 |
| 6 | 1,2 Mol-% Tricaprylmethylammoniumchlorid | $CHCl_3$ | 84,5 |
| 7 | 0,06 Mol-% Benzyldodecyldimethylammoniumchlorid | $CH_2Cl_2$ | 84,5 |
| 8 | 0,06 Mol-% Tetrabutylammoniumchlorid | $CH_2Cl_2$ | 85,4 |
| 9 | 0,06 Mol-% Tetrabutylammoniumchlorid | Toluol | 75,3 |
| 10 | 0,06 Mol-% Benzyltriethylammoniumchlorid | $CH_2Cl_2$ | 77,6 |
| 11 | 0,06 Mol-% Benzyltriethylammoniumchlorid | Toluol | 83,4 |
| 12 | 5,0 Mol-% Benzyldimethylamin | $CH_2Cl_2$ | 85,9 |
| 13 | 5,0 Mol-% Benzyldimethylamin | Toluol | 78,8 |
| 14 (Vergleich) | 5,0 Mol-% Triethylamin | Toluol | 67,2 |

Beispiel 14 ist nicht erfindungsgemäß, es wird hier gezeigt, daß bei Verwendung eines tertiären Amins mit weniger als 9 C-Atomen keine deutliche Verbesserung gegenüber der in Vergleichsbeispiel 9 vorgestellten unkatalysierten Reaktion eintritt.

### Beispiel 15
(erfindungsgemäß)

Phosphorsäurepropyldipropargylester

Analog zu dem Beispiel 3 setzt man Phosphorsäurepropylesterdichlorid mit Propargylalkohol um.

Ausbeute: 87,0%
Siedepunkt: 105–107° C/26,7 Pa
$n_D^{20}$ : 1,4512

### Beispiel 16
(erfindungsgemäß)

Thionophosphorsäureethyldipropargylester

Analog zu Beispiel 5 setzt man Thionophosphorsäureethylesterdichlorid mit Propargylalkohol in Toluol in Gegenwart von 0,06 Mol-% Tricaprylmethylammoniumchlorid bei 50° C um. Nach 15 bis 20 Std. ist die Reaktion beendet. Das Rohprodukt wird intensiv über $CaCl_2$ getrocknet.

Man erhält nach Gaschromatographie 70,0% Ausbeute an Thionophosphorsäureethyldipropargylester.

Kp.: 105° C/6,7 Pa
$n_D^{20}$ : 1,4888
Reinheit nach GC: 95,0%

## Patentansprüche

1. Verfahren zur Herstellung von Phosphorsäurepropargylestern der allgemeinen Formel

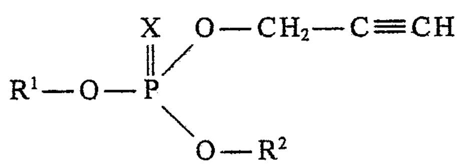

worin

$R^1$ und $R^2$ unabhängig voneinander für Aryl-, $C_{1-4}$-Alkyl-, Alkenyl- und Alkinylreste stehen, und
X Sauerstoff oder Schwefel bedeutet,

dadurch gekennzeichnet, daß man ein Phosphorsäuremono- oder -diesterchlorid mit mindestens der äquivalenten Menge Propargylalkohol in einem Zweiphasensystem in Gegenwart einer anorganischen Base in mindestens äquivalenter Menge als Säurefänger unter Verwendung von 0,001 bis 100 Mol-%, bezogen auf Phosphorsäureesterchlorid, eines tertiären Amins, quartären Ammonium- oder -phosphoniumsalzes mit zusammen mindestens 9 C-Atomen als Katalysator umsetzt.

2. Verfahren nach Anspruch 1, dadurch gekennzeichnet, daß man 0,01 bis 10 Mol-%, bezogen auf Phosphorsäureesterchlorid, eines tertiären Amins, quartären Ammonium- oder -phosphoniumsalzes mit mindestens 9 C-Atomen als Katalysator verwendet.

3. Verfahren nach Anspruch 1, dadurch gekennzeichnet, daß X für Sauerstoff steht.

4. Verfahren nach Anspruch 1, dadurch gekennzeichnet, daß X für Sauerstoff, $R^1$ für den Propargylrest und $R^2$ für einen $C_{1-4}$-Alkylrest stehen.

5. Verfahren nach Anspruch 1 bis 3, dadurch gekennzeichnet, daß man Methylenchlorid, Chloroform oder Toluol als Lösungsmittel verwendet.

6. Verfahren nach Anspruch 1 bis 4, dadurch gekennzeichnet, daß man tertiäre Amine mit

mindestens 9 C-Atomen als Katalysator verwendet.

7. Verfahren nach Anspruch 1 bis 4, dadurch gekennzeichnet, daß man quartäre Ammoniumsalze mit mindestens 9 C-Atomen im kationischen Teil des Moleküls als Katalysator verwendet.

## Claims

1. Process for the preparation of phosphoric acid propargyl esters of the general formula

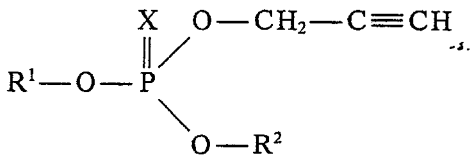

wherein

R¹ and R² independently of one another represent an aryl radical or a $C_{1-4}$-alkyl, alkenyl or alkinyl radical and

X denotes oxygen or sulphur,

characterised in that a phosphoric acid monoester chloride or diester chloride is reacted with at least the equivalent amount of propargyl alcohol in a two-phase system in the presence of an inorganic base in at least the equivalent amount as the acid-trapping agent, using 0.001 to 100 mol %, relative to the phosphoric acid ester chloride, of a tertiary amine or quaternary ammonium or phosphonium salt with a total of at least 9 C atoms as the catalyst.

2. Process according to Claim 1, characterised in that 0.01 to 10 mol %, relative to the phosphoric acid ester chloride, of a tertiary amine or quaternary ammonium or -phosphonium salt with at least 9 C atoms is used as the catalyst.

3. Process according to Claim 1, characterised in that X represents oxygen.

4. Process according to Claim 1, characterised in that X represents oxygen, R¹ represents the propargyl radical and R² represents a $C_{1-4}$-alkyl radical.

5. Process according to Claim 1 to 3, characterised in that methylene chloride, chloroform or toluene is used as the solvent.

6. Process according to Claim 1 to 4, characterised in that tertiary amines with at least 9 C atoms are used as the catalyst.

7. Process according to Claim 1 to 4, characterised in that quaternary ammonium salts with at least 9 C atoms in the cationic part of the molecule are used as the catalyst.

## Revendications

1. Procédé de préparation d'esters propargyliques d'acide phosphorique de formule générale:

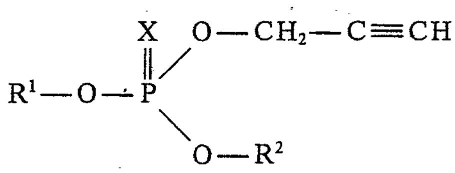

dans laquelle

R¹ et R² représentent chacun indépendamment l'un de l'autre un groupe aryle, un groupe alkyle en $C_1-C_4$, un groupe alcényle en $C_1-C_4$ et un groupe alcinyle en $C_1-C_4$, et

X représente l'oxygène ou le soufre,

caractérisé en ce qu'on fait réagir un chlorure de monoester ou de diester d'acide phosphorique avec au moins la quantité équivalente d'alcool propargylique dans un système à deux phases en présence d'une base inorganique en une quantité au moins équivalente comme fixateur d'acide, en utilisant 0,001 à 100% molaires (calculé sur le chlorure d'ester d'acide phosphorique) d'une amine tertiaire ou d'un sel de phosphonium ou d'ammonium quaternaire contenant au moins 9 atomes de carbone, comme catalyseur.

2. Procédé suivant la revendication 1, caractérisé en ce qu'on utilise 0,01 à 10% molaires (calculé sur le chlorure d'ester d'acide phosphorique) d'une amine tertiaire ou d'un sel de phosphonium ou d'ammonium quaternaire contenant au moins 9 atomes de carbone, comme catalyseur.

3. Procédé suivant la revendication 1, caractérisé en ce que X représente l'oxygène.

4. Procédé suivant la revendication 1, caractérisé en ce que X représente l'oxygène, $R^1$ représente le groupe propargyle et $R^2$ représente un groupe alkyle en $C_1-C_4$.

5. Procédé suivants les revendications 1 à 3, caractérisé en ce qu'on utilise le chlorure de méthylène, le chloroforme ou le toluène comme solvant.

6. Procédé suivant les revendications 1 à 4, caractérisé en ce qu'on utilise des amines tertiaires contenant au moins 9 atomes de carbone comme catalyseur.

7. Procédé suivant les revendications 1 à 4, caractérisé en ce que, comme catalyseur, on utilise des sels d'ammonium quaternaire contenant au moins 9 atomes de carbone dans la fraction cationique de la molécule.